# EUROPEAN PATENT APPLICATION

(11) **EP 1 039 167 A1**
(43) Date of publication of application: **27.09.2000**
(21) Application number: 00106101.9
(22) Date of filing: 21.03.2000
(51) Int. Cl.: F16D 69/02

(54) **Inertia brake cone clutch friction material**

(30) Priority: 23.03.1999 US 125710 P
(71) Applicant: EATON CORPORATION, Cleveland, Ohio 44114-2584 (US)
(72) Inventor: Davis, Alan Richard, Plainwell, Michigan 49080 (US); Hughes, Douglas Anthony, Wixorn, Michigan 48393 (US); Vukovich, Dennis Tracey, Plymouth, Michigan 48170 (US); Fernandez, Josevaldo Roberto, 13320-040 Salto-SP (BR)
(74) Representative: Patentanwälte Rüger, Barthelt & Abel

(57) **Abstract**

Disclosed herein is an improved friction element having a porous, woven carbon fabric friction material including individual carbon fibers coated with pyrolytic carbon, the friction material having an adhesion surface and an initial engagement surface. The adhesion surface is bonded to a solid substrate. The friction material engagement surface is improved by forming a final engagement surface by removing at least about 0.001 inch layer of material. Also disclosed is a method for forming a friction element having a pyrolytic carbon friction material, as well as a method for preparing the surface of a pyrolytic carbon friction material. By increasing the density of the material at an engagement surface by removing at least about 0.001 inch of material, the rate of initial wear of the friction material is substantially reduced.

## Description

### RELATED APPLICATIONS

This application claims priority of previously filed provisional U.S. Application Serial No. 60/125,710, filed March 23, 1999.

### FIELD OF THE INVENTION

The present invention relates to a friction material for clutches and brakes, and more specifically to a method for forming a carbon composite friction element having carbon composite friction material.

### BACKGROUND OF THE INVENTION

Friction transmission and energy absorption devices, such as clutches, brakes, transmissions and the like, typically include two parts which are selectively disengaged and engaged to cooperatively act as a drive or brake. One or both of the engaging surfaces of these parts typically has a friction material bonded to a metal part. In wet transmission devices, an oil or other suitable cooling medium is circulated about and between the engaging surfaces of the two parts.

Several of the many desirable characteristics sought in a friction material are low cost, high wear resistance, high heat resistance, high coefficients of friction, consistent coefficients of friction over a wide heat and load range and time periods, and close or identical static and dynamic coefficients of friction. Differences in static and dynamic coefficients of friction are believed to cause the phenomenon of stick-slip or chatter in clutches and brakes. The friction material incorporated in the present invention is relatively inexpensive, exhibits a high level of these desirable characteristics, and eliminates or virtually eliminates chatter when used in wet clutches and brakes.

The material incorporated herein is a carbon composite material produced by a CVD process and is generally referred to as pyrolytic carbon. Herein, carbon and graphite materials produced by CVD on a carbon or graphite cloth will be referred to as pyrolytic carbon material unless explicitly stated otherwise.

It has been discovered that pyrolytic carbon material having multiple layers of cloth substrate highly densified by CVD infiltration provides chatter-free results when run against a metal, such as steel or iron, in a wet clutch or brake. This discovery reduces the amount of composite material required for a given clutch or brake and therefore reduces costs. Pyrolytic carbon when used in wet clutches and brakes, seems to be insensitive to the lubricating or cooling oil used.

In certain wet clutch and brake applications requiring relatively thin amounts of friction material in the range of 0.080 to 0.100 inches, pyrolytic carbon material may be formed of a single porous layer of cloth substrate or two or three interwoven porous layers of fabric which is infiltrated by CVD for relatively short periods of time.

Tests of this relatively thin and quickly infiltrated material have provided excellent results in wet clutches and brakes having the material running against steel and against itself. Further, when formed of a single layer of woven fabric, this material seems to exhibit improved bonding characteristics when it is adhesively bonded to a support member such as a steel disc used in a limited slip differential or to a cone in a clutch brake.

U.S. Pat. No. 4,291,794 to Bauer discloses the use of a woven carbon fabric material as the friction material for such applications. The material preferably is a single ply and consists of porous, woven carbon cloth in which individual fibers are coated with pyrolytic carbon. This patent discloses that such a material can be bonded to a metallic backing member by commercially available, high temperature adhesives. Synthetic rubber-phenolic resin base thermosetting adhesives are commonly used for this purpose.

The starting material for the contact surface of a friction element is pyrolytic carbon in the form of sheets or pads of a desired configuration that are punched, cut or otherwise suitably blanked out of the sheet material. A thin layer of the pyrolytic carbon material to be bonded to a solid substrate is removed, preferably by abrasion means, prior to applying the adhesive to an adhesion surface of the material. While this surface removal step can be performed on individual pads, it is more conveniently and preferably performed by removing a surface layer on one side of the entire sheet prior to blanking out the pads. The pyrolytic carbon friction material is then bonded to the surface of a solid substrate. The friction material has an engagement surface for contact with another element.

Although the pyrolytic friction material used in the manufacture of frictional elements and the method for forming friction elements and friction material therefor is excellent, the surface density of the material at the engagement surface is relatively low compared to the density of the material 0.005 inch below the engagement surface as formed. The relatively low surface density results in a high rate of initial wear. Thus, it would be desirable to yield a friction material having an increased surface density which would improve the dimensional stability of the material.

### SUMMARY OF THE INVENTION

It is a feature of the present invention to provide a method for forming a friction element having a porous, woven carbon fabric friction material including individual carbon fibers coated with pyrolytic carbon, where the friction material is bonded to a solid substrate, the method comprises the steps of providing a meshed cloth substrate having a discernable surface texture formed of carbon fibers, coating the substrate with carbon deposited on the fibers to a level forming a friction material having a relatively open mesh with the discernable surface texture of the cloth substrate being substantially the same after the coating is applied, bonding friction material to a solid substrate surface and removing at least a 0.001 inch layer of material from the surface of the friction material. The step of removing a layer of material may be carried out by an abrasion process such as sanding or grinding. Furthermore, the layer of material removed may be between about 0.002 to 0.005 inch.

In the preferred embodiment, a method for preparing a surface of a porous, woven carbon fabric friction material including individual carbon fibers coated with pyrolytic carbon is disclosed, where the friction material has an adhesion surface and an engagement surface, and where the material adhesion surface is bonded to a solid substrate, the method comprises the step of removing at least a 0.001 inch layer of material from the engagement surface of the friction material.

A friction element having a porous, woven carbon fabric friction material including individual carbon fibers coated with pyrolytic carbon, where the friction material has an adhesion surface and an initial engagement surface, where the adhesion surface is bonded to a solid substrate, the improvement of which comprises the friction material engagement surface improved by forming a final engagement surface by removing at least a 0.001 inch layer of material from the initial engagement surface. The friction material engagement surface may be formed by an abrasion process. Furthermore, the friction material engagement surface may be improved by removing a layer of material between about 0.002 to 0.005 inch.

Further objects, features and advantages of the present invention will become apparent to those skilled in the art from analysis of the following written description, the accompanying drawings and appended claims.

### BRIEF DESCRIPTION OF THE DRAWINGS

FIG. 1 is a cross sectional view of an inertia brake incorporating the pyrolytic carbon material of the present invention;
FIG. 2 is a cross sectional view of a transmission synchronizer ring incorporating a pyrolytic carbon friction material prepared by the method of the present invention;
FIG. 3 is a perspective view of the friction material incorporeated in the present invention revealing the contact surface of the friction material in an unworn state;
FIG. 4 is a second perspective view of the friction material incorporeated in the present invention revealing the contact surface of the friction material in an unworn state;
FIG. 5 is a perspective view of the friction material incorporeated in the present invention revealing the contact surface of the friction material in a first worn state; and
FIG. 6 is a perspective view of the friction material incorporeated in the present invention revealing the contact surface of the friction material in a first worn state.

### DESCRIPTION OF THE PREFERRED EMBODIMENT

The present invention is an improved friction element and a method for forming a friction element having a pyrolytic carbon composite friction material. As used herein, the term "porous, woven carbon fabric friction material" means a weave of individual carbon fibers having an open porosity and coated with pyrolytic carbon as described in U.S. Pat. No. 4,291,794 to Bauer which is incorporated by reference herein. The material preferably is a single ply and has a thickness of about 0.020 to about 0.050 inch. The individual fibers can be spun fibers or continuous filaments.

Pyrolytic carbon friction material is made by taking a woven substrate such as a woven carbon based fabric and heating it in an oxygen free atmosphere to drive off substantially all elements except for carbon material and then depositing more carbon material, such as from a methane vapor onto the carbon cloth using a chemical vapor deposition (CVD) process. Such a process is described in detail in U.S. Pat. No. 4,700,823, entitled "Clutch With Pyrolytic Carbon Friction Material", assigned to the assignee of the present invention, the disclosure of which is hereby incorporated by reference. This process for forming pyrolytic carbon yields a material with a low surface density and exhibits a high rate of initial wear. The high rate of initial wear has to be taken into account when designing the device, which can comprise the performance. Up to fifty percent of the wear allowances are used in the first few hours of operation. If this high initial rate of wear could be eliminated, design wear allowances could be significantly reduced.

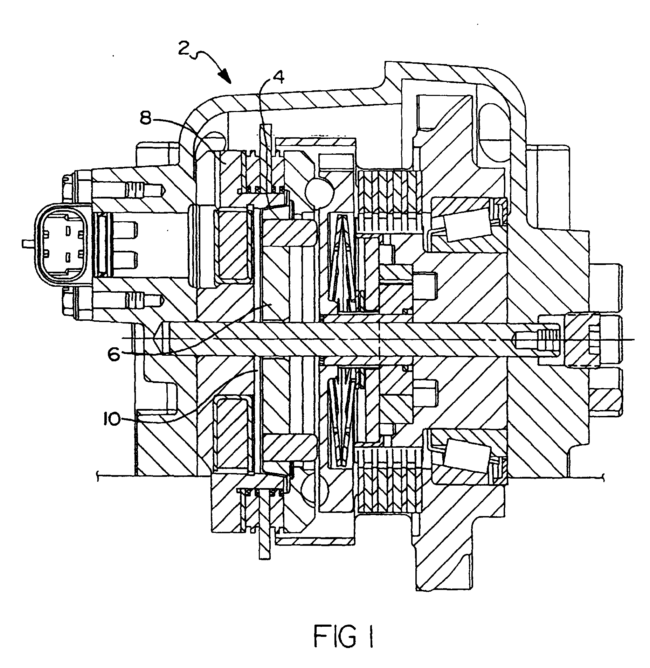

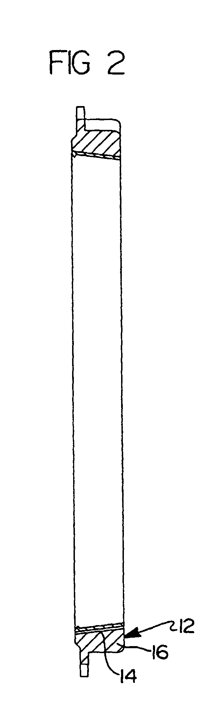

The present invention will be described in connection with friction transmission devices, such as the inertia brake 2 shown in FIG. 1 and the synchronizer ring 12 as shown in FIG. 2. The inertia brake 2 and synchronizer ring 12 are set forth as illustrative examples and are not intended to limit the scope of the present invention, quite the contrary, the present invention may be applied to any application involving pyrolytic carbon material in a friction transmission or energy absorption device.

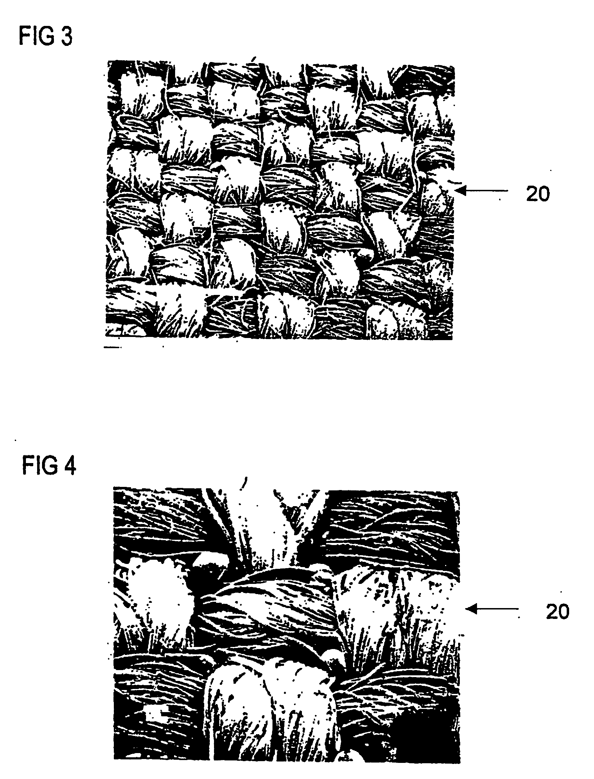

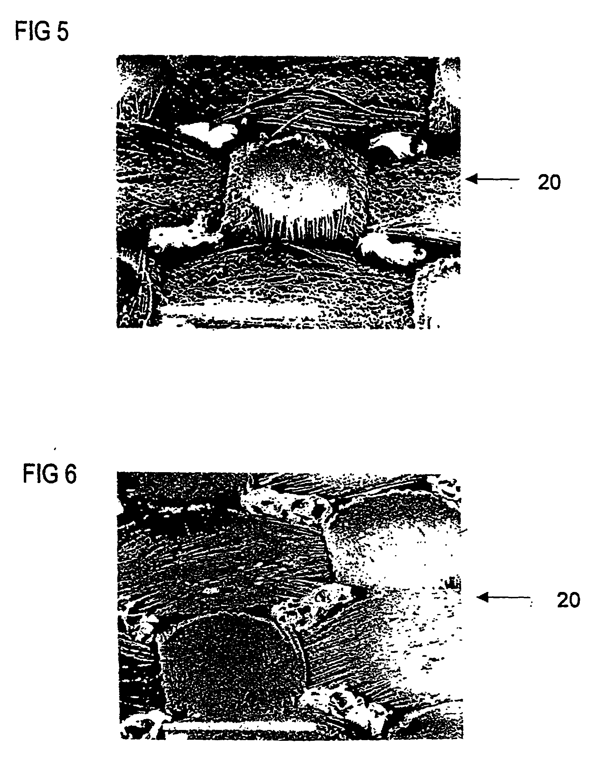

The material incorporated in the present invention may be formed of multiple layers of carbon or graphite cloth substrate highly densified by CVD infiltration. However, the material is preferably formed of a single layer of carbon or graphite cloth substrate infiltrated by a CVD process. Illustrations of the friction material 20 are shown in FIGS. 3-6. The material 20 in FIGS. 3 and 4 is unworn and that of FIGS. 5 and 6 is in two different stages of wear. The material 20 in FIGS. 3 and 4 is an illustration of a 0.016 inch thick, single layer, plain weave, Polyacrilonitrile (PAN) based, graphite fabric densified by a CVD process. The coarse fabric texture of the material is readily discerned as well as the yarns and many of the fibers or filaments defining the yarns. FIGS. 3 and 4 clearly show the surface texture of the woven fabric and relatively large voids between the fibers of the fabric. The low surface density of the material 20 results in a low contact surface area when the pyrolytic carbon material contacts another element. A high rate of initial wear results from the low contact surface area. It should be intuitive that the low contact surface area is a result of contact with the "peaks" of the pyrolytic carbon material 20 as formed. FIGS. 4 and 5 reveal an increased contact surface area once the material 20 is partially worn. Once the contact surface area is increased, by flattening the "peaks", the dimensional stability of the material 20 improves substantially.

It is known to grind a portion of the outside layer of a CVD produced pyrolytic carbon friction material for purposes of increasing the bond strength to a substrate when using a high temperature thermal selling adhesive such as a synthetic rubber-phenolic resin as a bonding agent. This bonding process is described in detail in commonly assigned U.S. Pat. No. 4,778,548, to Fox, et al entitled "Bonding Woven Carbon Fabric Friction Material", the disclosure of which is incorporated by reference herein.

According to the present invention, a very thin outer layer, typically a few thousandths of an inch, of the pyrolytic carbon friction material is removed, preferably by an abrasion process, thereby removing a layer of the material that exhibits a relatively high rate of wear. Pyrolytic carbon friction material as produced has a course texture and relatively large voids between the fibers of the fabric. By grinding the pyrolytic carbon friction material, the wear characteristics of the material are enhanced, especially in the first few hours of operation. The present invention specifically improves the performance of friction transmission or energy absorption related devices which employ a friction material bonded to a solid substrate, such as a synchronizer and/or an inertia brake. The prior art teaches a technique for enhanced bonding of pyrolytic carbon to a solid substrate by grinding or sanding the surface of a pyrolytic carbon material to strengthen the bond between the pyrolytic carbon material and the solid substrate, forming a friction element. The present invention involves grinding or sanding the surface of the pyrolytic carbon material to form an improved engagement surface for frictional coupling between the solid substrate and another element of a system for improved wear and performance.

The amount of material removed is that amount sufficient to break through the surface of the pyrolytic carbon coating on a substantial portion of the individual carbon fibers of the friction material. Generally, the thickness of the layer removed is at least about 0.001 inch, preferably between about 0.002 to about 0.005 inch. While various suitable abrasion means can be used for the surface removal, sanding or grinding is preferred because of the ease of operation and low cost. Even though removal of a layer about 0.001 to about 0.005 inch thick is usually enough to obtain the desired surface, more material may be removed to achieve the desired final thickness of the material for some applications.

Referring again to FIG. 1, a cross sectional view of an inertia brake 2 is shown. The inertia brake 2 includes an armature 6 having the pyrolytic carbon friction material 4 of the present invention bonded thereto. The friction material 4 is formed from individual carbon fibers coated with pyrolytic carbon to form a woven carbon fabric friction material. The friction material has an adhesion surface and an engagement surface. The adhesion surface of the friction material 4 is bonded to the armature 6 while the engagement surface is disposed for contact with an adjacent element. In the present illustration, the engagement surface of the pyrolytic carbon friction material will make frictional contact with a stationary outer ring 8 of the inertia brake 2. The friction material has an initial engagement surface which is subject to an abrasion process, such as grinding, to remove at least about 0.001 inch of material from the initial engagement surface to form a final engagement surface. The process of the present invention decreases the wear rate of the friction material 4 so that the performance of the inertia brake 2 can be improved by allowing internal clearances to be reduced such as the operating clearance between the armature 6 and the coil plate 10.

Referring now to FIG. 2, a cross sectional view of a transmission synchronizer ring 12 is shown. Similar to the process described above, the pyrolytic carbon friction material 14 is bonded to the synchronizer ring 16 using a thermal setting adhesive applied to the adhesion surface. The engagement surface of the friction material 14 that makes frictional contact with another transmission component is ground to reduce the thickness of the material to flatten the "peaks" as shown in FIGS. 3 and 4 thereby increasing the contact surface area of the friction material 14. By preparing the engagement surface of the carbon friction material 14 as disclosed herein the dimensions of the synchronizer ring 12 are more stable throughout its service life, yielding far more predicable synchronizer performance and enhancement of transmission shift quality, particularly in the first hours of operation.

The foregoing discussion discloses and describes the preferred embodiment of the present invention. However, one skilled in the art will readily recognize from such discussion and from the accompanying drawings and claims that various changes, modifications and variations can be made therein without departing from the true spirit and fair scope of the invention as defined in the following claims.

## Claims

1. A method for forming a friction element having a porous, woven carbon fabric friction material including individual carbon fibers coated with pyrolytic carbon, the friction material bonded to a solid substrate, said method comprising the steps of:
providing a meshed cloth substrate having a discernible surface texture formed of carbon fibers;
coating the substrate with carbon deposited on the fibers to a level forming a friction material having a relatively open mesh with the discernible surface texture of the cloth substrate being substantially the same after the coating is applied;
bonding the friction material to a solid substrate surface; and
removing at least a 0.001 inch layer of material from the surface of the friction material.

2. The method according to claim 1, wherein said step of removing a layer of material is carried out by an abrasion process.

3. The method according to claim 1, wherein the layer of material removed is between about 0.002 to 0.005 inch.

4. A method for preparing a surface of a porous, woven carbon fabric friction material including individual carbon fibers coated with pyrolytic carbon, the friction material having an adhesion surface and an engagement surface, the material adhesion surface bonded to a solid substrate, said method comprising the step of:
removing at least a 0.001 inch layer of material from the engagement surface of said friction material.

5. The method according to claim 4, wherein said step of removing a layer of material is carried out by an abrasion process.

6. The method according to claim 4, wherein the layer of material removed is between about 0.002 to 0.005 inch.

7. A friction element having a porous, woven carbon fabric friction material including individual carbon fibers coated with pyrolytic carbon, said friction material having an adhesion surface and an initial engagement surface, said adhesion surface bonded to a solid substrate, the improvement comprising:
said friction material engagement surface improved by forming a final engagement surface by removing at least a 0.001 inch layer of material from said initial engagement surface.

8. The friction element according to claim 7, wherein said final engagement surface is formed by an abrasion process.

9. The friction element according to claim 7, wherein the layer of material removed is between about 0.002 to 0.005 inch.
